# DEMANDE DE BREVET EUROPEEN

(11) **EP 1 103 897 A1**
(43) Date de publication de la demande: **30.05.2001**
(21) Numéro de dépôt: 00403317.1
(22) Date de dépôt: 28.11.2000
(51) Int. Cl.: G06F 12/08

(54) **Dispositif de mémoire**

(30) Priorité: 29.11.1999 FR 9915004
(71) Demandeur: CSEM Centre Suisse d'Electronique et de Microtechnique SA, 2007 Neuchâtel (CH)
(72) Inventeur: Masgonty, Jean-Marc, 2035 Cortaillod (CH); Schinz, Michel, 1607 Palezieux-Gare VD (CH); Piguet, Christian, 2000 Neuchatel (CH)
(74) Mandataire: Caron, Gérard

(57) **Abrégé**

Ce dispositif de mémoire fonctionne avec un processeur (1) dont il contient le programme à exécuter et qui émet des adresses (A) à destination de ce dispositif de mémoire. Une mémoire de programme (3) stocke des blocs d'instructions (B) à exécuter. Une mémoire cache dynamique (5) stocke des blocs d'instructions (B) dont la fréquence d'utilisation pendant l'exécution dudit programme présente des conditions prédéterminées. Des moyens d'extraction et de transmission (8, 9, 10, 12) extraient sélectivement de la mémoire principale (3) ou de la mémoire cache dynamique (5) des blocs d'instructions (B) destinés à être exécutés par le processeur (1).

Une mémoire cache morte (4) stocke des blocs d'instructions (B) utilisés le plus fréquemment par le processeur (1) au cours de l'exécution du programme. Les moyens d'extraction et de transmission (6, 7, 11) sont également agencés pour, en fonction du contenu des adresses (A), envoyer sélectivement des blocs d'instructions à partir de la mémoire cache morte (4) vers le processeur (1).

## Description

La présente invention est relative à un dispositif de mémoire comprenant une mémoire principale et une mémoire cache.

Dans les circuits intégrés de traitement des données, il est connu d'utiliser différents types de mémoires selon l'usage que fait le circuit des instructions contenues dans la mémoire. Ainsi, il est courant d'utiliser à côté d'une mémoire principale de grande capacité, une mémoire cache de plus petite capacité.

On connaît essentiellement deux types d'arrangement de mémoire optimisant les facteurs de vitesse et de consommation.

L'un de ces types est utilisé dynamiquement, c'est-à-dire qu'au cours de l'exécution du programme principal, les instructions du programme, qui sont extraites de la mémoire principale à destination du processeur, sont également copiées dynamiquement dans la mémoire cache et extraites de celle-ci lorsque le processeur en a à nouveau besoin pour l'exécution du programme. De cette manière, cette exécution peut être plus rapide, car l'obtention d'une instruction à partir d'une mémoire de petite taille demande moins de temps et consomme moins d'énergie que si cette instruction se trouvait dans la mémoire principale de grande taille. Cette solution est surtout intéressante, si une instruction ou un groupe d'instructions doit être souvent utilisé au cours de l'exécution d'un programme.

L'autre type d'arrangement de mémoire est utilisé dans le cadre de ce que l'on peut appeler une organisation hiérarchique de la mémoire. Dans ce cas et une fois pour toutes, les groupes d'instructions les plus utilisés sont enregistrés dans une mémoire de petite taille et les groupes moins utilisés dans une mémoire de grande taille. La répartition des instructions est donc statique dans ce genre de hiérarchie. Bien entendu, l'objectif est le même que dans le cas précédent, à savoir que les instructions fréquemment utilisées sont rangées dans une petite mémoire ayant un temps d'accès plus court et consommant moins d'énergie. Dans le cadre de la présente invention et pour la suite de la description, on conviendra d'appeler "mémoire cache" aussi bien la mémoire dynamique (RAM) que la mémoire statique (ROM), dès lors que cette dernière est utilisée dans le même contexte et pour les mêmes avantages que la mémoire dynamique.

Pour mettre en oeuvre l'extraction des instructions d'une mémoire cache, les adresses délivrées par le processeur comportent une étiquette représentée en général par les bits de poids le plus fort. L'adresse est présentée à la fois à la mémoire cache associée au processeur et à un comparateur qui compare l'étiquette de cette adresse à des étiquettes d'instructions mémorisées dans une section particulière de la mémoire cache. Si la comparaison établit que l'étiquette se trouve dans cette section de la mémoire cache (on parle alors d'un "touché"- "hit" en anglais), l'instruction correspondante se trouve dans la mémoire cache et elle est extraite de celle-ci pour être transférée vers le processeur. Sinon (il s'agit alors d'un "raté"- "miss" en anglais), l'adresse est alors transmise à la mémoire de programme où se trouve l'instruction cherchée; cette dernière est alors extraite pour être passée vers le processeur. Dans le cas où la mémoire cache est de type dynamique, cette même instruction ainsi que son étiquette sont ensuite de préférence écrites dans la mémoire cache pour une utilisation ultérieure.

L'invention a pour but de fournir un dispositif de mémoire permettant d'augmenter la rapidité d'accès aux instructions d'un programme à exécuter par un processeur et de réduire l'énergie consommée pour assurer cet accès.

Elle a donc pour objet un dispositif de mémoire présentant les caractéristiques telles que définies dans la revendication 1..

Grâce à ces caractéristiques, on peut éviter toute inscription inutile d'instructions dans la mémoire cache dynamique, ce qui permet de conférer à cette mémoire une taille réduite au stricte minimum. Ainsi, il est possible de réduire la consommation et d'augmenter la vitesse de travail du dispositif.

Des développements avantageux de l'invention sont définies dans les sous-revendications.

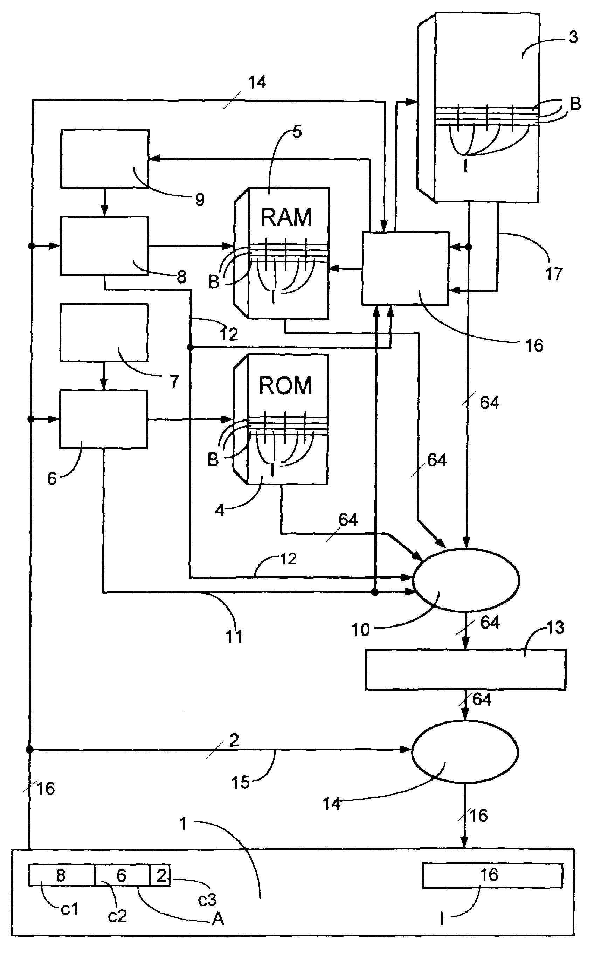

D'autres caractéristiques et avantages de l'invention apparaîtront au cours de la description qui va suivre, donnée uniquement à titre d'exemple et faite en se référant au dessin annexé sur lequel:
- la figure unique représente un schéma simplifié d'un dispositif de mémoire selon un mode de réalisation préféré de l'invention.

Sur cette figure, on voit représenté un processeur 1 qui fournit des adresses A à un dispositif de mémoire 2 selon l'invention et qui reçoit de ce dernier des instructions I destinées à y être exécutées. Dans l'exemple représenté, chaque adresse A et chaque instruction I sont définies sur 16 bits, ce nombre n'étant évidemment pas limitatif. Chaque adresse A est composée, en allant du bit le plus significatif au bit le moins significatif, d'un champ d'étiquette c1, d'un champ d'adresse de mémoire cache c2 et d'un champ de sélection d'instruction c3 comprenant dans l'exemple décrit respectivement 8, 6 et 2 bits.

Le dispositif de mémoire 2 comprend une mémoire principale de programme 3, de 2¹⁴ emplacements, ce nombre n'étant également donné qu'à titre d'exemple. Cette mémoire 3 contient le programme à exécuter par le processeur 1.

Le dispositif de mémoire 2 comprend également une mémoire cache morte ROM 4 et une mémoire cache dynamique RAM 5 dont les capacités sont ici choisies à 2⁶ emplacements.

La largeur des emplacements de mémoire dans les mémoires 3 à 5 peut être choisie selon l'application envisagée. Dans l'exemple, elle est de 64 bits, chaque emplacement stockant un bloc B de 4 instructions I de, chacune, 16 bits.

La mémoire cache morte 4 est connectée par son entrée d'adresse à un comparateur d'étiquette 6 qui reçoit les champs c1 et c2 de chaque adresse délivrée par le processeur 1 et qui est connecté également à une section de mémoire morte d'étiquettes 7 dans laquelle sont mémorisées de façon permanente des étiquettes destinées à désigner des blocs d'instruction B rangés dans la mémoire cache morte 4.

De façon analogue, la mémoire cache dynamique 5 est connectée à un comparateur d'étiquette 8 qui reçoit également les champs c1 et c2 de chaque adresse provenant du processeur 1 et qui est connecté à une section de mémoire dynamique d'étiquettes 9.

Les mémoires 3 à 5 sont connectées par leurs sorties d'instructions à des entrées respectives d'un multiplexeur 10. Celui-ci transmet sélectivement les blocs d'instructions B qui lui parviennent des mémoires 3 à 5 à sa sortie en fonction de l'état de deux lignes de commande 11 et 12 par lesquelles ce multiplexeur est connecté respectivement aux comparateurs 6 et 8. Ces lignes 11 et 12 transmettent des signaux de touché/raté provenant respectivement de ces comparateurs 6 et 8, au multiplexeur 10 pour lui permettre de devenir transparent pour les blocs d'instructions dont l'étiquette présente une coïncidence avec celles stockées respectivement dans les sections de mémoire 7 et 9.

La sortie du multiplexeur 10 est connectée à un tampon 13 destiné à transférer les blocs B à un autre multiplexeur 14 de sélection d'instructions. Ce dernier est connecté à l'entrée d'instructions du processeur 1 pour lui transmettre l'une des instructions I d'un bloc d'instructions B transmis au multiplexeur 14, en fonction de la valeur des deux bits les moins significatifs (champ c3) de l'adresse A, cette valeur transitant sur une ligne 15.

Le dispositif de mémoire 2 comprend également une logique d'écriture 16 qui est connectée pour recevoir chaque adresse A, sauf ses deux bits les moins significatifs, certains blocs d'instructions B de la mémoire principale 3, et les signaux de touché/raté transitant sur les lignes 11 et 12. La logique d'écriture 16 est conçue de telle façon qu'au cas où, lors de l'émission d'une adresse par le processeur 1, les lignes 11 et 12 transmettent toutes deux un raté, le bloc d'instructions qui se trouve alors à l'adresse correspondante dans la mémoire 3 et l'étiquette de cette adresse sont transférés respectivement dans la mémoire RAM 5 et dans la section de mémoire dynamique d'étiquettes 9. Une telle logique d'écriture est connue en soi dans la technologie des mémoires cache dynamiques de sorte que l'on n'en donne pas de description détaillée ici. On notera ici qu'afin d'économiser de l'énergie, les quatorze bits de l'adresse A appliqués aux comparateurs 6 et 8 ne sont transmis à la mémoire 3 que lorsque les lignes 11 et 12 transmettent un signal de raté. Dans les cas contraires (ligne 11 ou ligne 12 transmettant un signal de touché), la mémoire 3 ne reçoit pas l'adresse A. Cette fonction de transmission/non-transmission de l'adresse A à la mémoire 3 en fonction des signaux des lignes 11 et 12 peut être réalisée par une logique simple inclue dans le bloc 16.

Le fonctionnement de ce dispositif de mémoire est le suivant.

La mémoire cache ROM 4 contient, de façon statique, des blocs d'instructions dont les instructions sont utilisées fréquemment sur une longue période de temps donnée pendant l'exécution du programme par le processeur 1. De tels blocs d'instructions sont encore appelés blocs à "longue durée de vie" par opposition à des blocs d'instructions qui peuvent être souvent utilisés par le processeur mais pendant une courte période de temps ("faible durée de vie"). La section de mémoire d'étiquettes 7 de la mémoire ROM 4 contient les étiquettes de ces blocs d'instructions à longue durée de vie. Son contenu est également établi une fois pour toutes.

En revanche, les contenus de la mémoire 5 et de sa section de mémoire d'étiquettes 9 sont dynamiquement variables et se chargent respectivement d'un bloc d'instructions et d'une étiquette associée d'une adresse A donnée, lorsque cette étiquette n'est présente ni dans la section de mémoire 7 associée à la mémoire cache ROM 4, ni dans celle, 9 associée à la mémoire cache RAM 5.

Ainsi, lorsqu'une adresse A est émise par le processeur 1, l'étiquette de son champ c1 va être comparée à celles présentes dans les sections de mémoire d'étiquettes 7 et 9, respectivement par les comparateurs 6 et 8.

Si l'étiquette se trouve dans la section de mémoire 7, c'est qu'il s'agit d'un bloc d'instructions à longue durée de vie se trouvant dans la mémoire cache ROM 4. Le comparateur 6 transfère le champs c2 de l'adresse à la mémoire ROM 4 et produit un signal de touché qui est envoyé au multiplexeur 10. Le bloc d'instructions désigné par le champs c2 est sorti de la mémoire 4 et transféré par le multiplexeur 10 vers le tampon 13. Le champs c3 de l'adresse désigne l'instruction dans le bloc transmis, cette instruction étant passée vers le processeur 1 par le multiplexeur 14, pour être exécutée. Le comparateur 8 a produit un signal de raté sur la ligne 12 et la logique 16 n'est donc pas activée.

Si l'étiquette se trouve dans la section de mémoire 9, c'est qu'il s'agit d'un bloc d'instructions dernièrement utilisé par le processeur 1. Dans ce cas, la ligne 11 porte un signal de raté et la ligne 12 un signal de touché fournis respectivement par les comparateurs 6 et 8. Le multiplexeur 10 est alors transparent pour le bloc d'instructions se trouvant dans la mémoire cache RAM 5 et désigné par le champs c2 de l'adresse A correspondante. L'instruction recherchée est transmise au processeur 1 par l'intermédiaire du multiplexeur 14 et du champs c3 de cette adresse A.

Si l'étiquette ne se trouve dans aucune des sections de mémoire d'étiquettes 7 et 9, le bloc d'instructions désigné par l'adresse correspondante se trouve dans la mémoire de programme 3. Dans ce cas, les lignes 11 et 12 portent toutes deux un signal de raté, les quatorze bits les plus significatifs de l'adresse A sont alors envoyés par le bloc 16 à la mémoire 3 et le bloc d'instructions B correspondant est alors transféré directement à partir de la mémoire principale 3 vers le multiplexeur 10 qui devient transparent pour cette voie directe. La logique 16 peut alors être configurée par les signaux de raté pour transférer le bloc d'instructions dans la mémoire cache RAM 5 et l'étiquette y afférente dans la section de mémoire 9.

Etant donné que les instructions à longue durée de vie sont rangées en permanence dans la mémoire cache ROM 4, on peut réduire considérablement la consommation et augmenter la vitesse de travail de l'ensemble. Ces instructions sont toujours disponibles ce qui peut être important pour des applications en temps réel dans lesquelles on peut ainsi réduire par exemple le temps de réponse du dispositif. En outre, les instructions provenant d'une mémoire ROM sont toujours valides, alors que celles provenant d'une mémoire RAM peuvent ne pas l'être. Le dispositif de mémoire selon l'invention présente ainsi un taux de touché élevé. Ces avantages n'entravent pas le fait que la mémoire RAM 5 peut être dynamisée et se charger d'instructions qui, pendant l'exécution du programme, sont temporairement d'usage fréquent. Ce cas peut être très utile pendant l'exécution de boucles de programme.

Toutefois, pour que le concept de l'invention ait une efficacité maximale, il importe d'optimiser autant que possible la taille de la mémoire RAM. En effet, plus la taille de cette dernière est grande, plus le nombre de "touchés" est important mais, également, plus sa consommation est grande. Par ailleurs, il peut arriver que le programme exécuté par le processeur 12 implique la mise en oeuvre d'instructions à usage très peu fréquent, voire à usage unique. Dans ce cas, il conviendrait d'éviter de les inscrire dans la mémoire cache RAM 5.

A cet effet, à chaque bloc d'instructions B contenu dans la mémoire 3 est adjoint un bit de drapeau (non désigné sur le dessin) qui peut être situé à un endroit quelconque dans ces blocs. Ces drapeaux peuvent être incorporés dans les instructions du programme par le calcul, en fonction notamment d'une analyse de la fréquence d'utilisation des instructions, ou être ajoutés individuellement à chaque bloc d'instructions au choix du programmeur à l'aide de simulations du programme devant être exécuté par le processeur 1.

Le bit de drapeau est inscrit comme étant actif dans un bloc d'instructions B, lorsqu'il vaut la peine d'écrire ce bloc dans la mémoire RAM 5 et de procéder à l'inscription de l'étiquette de son adresse dans la section de mémoire 9. En revanche, si le bit de drapeau est inscrit comme inactif, il peut agir sur la logique d'écriture 16 pour l'inhiber et empêcher qu'une telle écriture soit effectuée, moyennant quoi le bloc d'instructions B concerné est passé seulement directement vers le multiplexeur 10 pour permettre l'exécution de l'instruction requise par le programme. Le signal définissant l'état du drapeau pourra être appliqué à cette logique 16 par l'intermédiaire d'une connexion 17.

L'avantage de la présence d'un drapeau dans les blocs d'instructions consiste naturellement à éviter toute inscription inutile dans la mémoire RAM 5 pour ce qui concerne des instructions peu fréquentes ou dont l'inscription dans la RAM empêcherait le maintien dans celle-ci de blocs plus souhaités. La taille de la mémoire RAM peut ainsi être réduite au strict nécessaire.
Il en résulte un gain en consommation et en vitesse de travail, car on évite des écritures et des lectures dans la mémoire cache RAM.

L'invention n'est pas limitée au mode de réalisation décrit et représenté. En particulier, les tailles des mémoires, des adresses et des blocs d'instructions n'ont été données que pour fixer les idées et ne sont donc nullement limitatives.

## Revendications

1. Dispositif de mémoire destiné à fonctionner avec un processeur (1) contenant le programme à exécuter, le processeur étant adapté pour émettre des adresses (A) à destination de ce dispositif de mémoire, ce dernier comprenant une mémoire principale de programme (3) dans laquelle sont stockés des instructions (I) ou des blocs d'instructions (B) à exécuter par ledit processeur (1), et une mémoire cache dynamique (5) dans laquelle sont stockés des instructions ou des blocs d'instructions dont la fréquence d'utilisation pendant l'exécution dudit programme présente des conditions prédéterminées, ledit dispositif de mémoire comprenant également des moyens d'extraction et de transmission (8, 9, 10, 12) pour, en fonction du contenu desdites adresses (A), extraire sélectivement de ladite mémoire principale (3) ou de ladite mémoire cache dynamique (5) des instructions ou des blocs d'instructions destinés à être exécutés par ledit processeur (1) et transmettre ces instructions ou blocs d'instructions vers ce dernier, chaque instruction ou bloc d'instructions stocké dans ladite mémoire principale de programme étant pourvu d'un drapeau, caractérisé en ce que ladite mémoire principale de programme (3) comprend une sortie (17) sur laquelle, lors de l'extraction d'une instruction ou d'un bloc d'instructions, est présenté l'état du drapeau associé à ce dernier, et en ce que le dispositif de mémoire comprend également une logique de commande d'écriture (16), qui en fonction de l'état dudit drapeau, inscrit ou non dans ladite mémoire cache dynamique (5), l'instruction ou le bloc d'instructions extrait de ladite mémoire principale (3).

2. Dispositif de mémoire suivant la revendication 1, caractérisé en ce qu'il comprend également une mémoire cache morte (4) dans laquelle sont stockés des instructions (I) ou des blocs d'instructions (B) à longue durée de vie, et en ce que lesdits moyens d'extraction et de transmission (6, 7, 11) sont également agencés pour, en fonction du contenu desdites adresses (A), envoyer sélectivement des instructions ou des blocs d'instructions à partir de ladite mémoire cache morte (4) vers ledit processeur (1).

3. Dispositif de mémoire suivant la revendication 2, caractérisé en ce que, lesdites adresses (A) contenant chacune une étiquette (c1), lesdits moyens d'extraction et de transmission comprennent une section de mémoire morte d'étiquettes (7) associée à ladite mémoire cache morte (4), ainsi que des moyens de comparaison (6) qui délivrent un signal de touché/raté dont l'état est déterminé selon que l'étiquette (c1) d'une adresse (A) délivrée par ledit processeur (1) coïncide avec une étiquette (c1) se trouvant dans ladite section de mémoire morte d'étiquettes (4), et en ce que l'état dudit signal de touché/raté commande sélectivement le passage de l'instruction ou du bloc d'instructions pointé par l'adresse correspondante vers ledit processeur (1).

4. Dispositif de mémoire suivant la revendication 3, caractérisé en ce que lesdits moyens d'extraction et de transmission comprennent une section de mémoire dynamique d'étiquettes (9) associée à ladite mémoire cache dynamique (5), ainsi que des moyens de comparaison (8) qui délivrent un signal de touché/raté dont l'état est déterminé selon que l'étiquette (cl) d'une adresse (A) délivrée par ledit processeur (1) coïncide avec une étiquette se trouvant dans ladite section de mémoire dynamique d'étiquettes (9), et en ce que l'état dudit signal de touché/raté commande sélectivement le passage de l'instruction ou du bloc d'instructions pointé par l'adresse correspondante vers ledit processeur (1).

5. Dispositif de mémoire suivant les revendications 3 et 4, caractérisé en ce que lesdits moyens d'extraction et de transmission comprennent également un multiplexeur (10) connecté par son entrée aux sorties de ladite mémoire principale de programme (3), de ladite mémoire cache dynamique (5) et de ladite mémoire cache morte (4), la sortie de ce multiplexeur (10) étant reliée audit processeur (1) et ses entrées de commande étant connectées respectivement à des lignes de sortie (11, 12) desdits comparateurs (6, 8) pour lui appliquer les signaux de touché/raté respectifs.
